# EUROPEAN PATENT APPLICATION

(11) **EP 3 513 950 A1**
(43) Date of publication of application: **24.07.2019**
(21) Application number: 19152044.4
(22) Date of filing: 16.01.2019
(51) Int. Cl.: B29C 64/245, B29C 64/112, B33Y 30/00

(54) **THREE-DIMENSIONAL SHAPING DEVICE**

(30) Priority: 18.01.2018 JP 2018006401
(71) Applicant: Mimaki Engineering Co., Ltd., Tomi-City, Nagano 389-0512 (JP)
(72) Inventor: MATSUSHIMA, Takuya, Tomi-City, Nagano 389-0512 (JP)
(74) Representative: Fédit-Loriot

(57) **Abstract**

The present disclosure provides a three-dimensional shaping device having a mechanism for preventing waste liquid (liquid) generated on a shaping table (3) from flowing down from the shaping table.

There is provided a three-dimensional shaping device including a shaping table for shaping a three-dimensional shaped object, a supplying unit (10) that supplies liquid for shaping the three-dimensional shaped object onto the shaping table; and a liquid outflow preventing unit for preventing the liquid from flowing out from the shaping table, in which the liquid outflow preventing unit (20, 40) includes a preventing unit that prevents the liquid from the shaping table from flowing down or a receiving unit that receives the liquid that has flowed down from the shaping table.

## Description

### TECHNICAL FIELD

The present disclosure relates to a three-dimensional shaping device for shaping a shaped object having a three-dimensional shape.

### DESCRIPTION OF THE BACKGROUND ART

In recent years, a three-dimensional shaping device (3D printer) for shaping a shaped object having a three-dimensional shape has become widespread used. In such a three-dimensional shaping device, for example, a plurality of layers of ink formed by an inkjet head are stacked to shape a shaped object through a layering shaping method (see Japanese Unexamined Patent Publication No. 2015-202683).

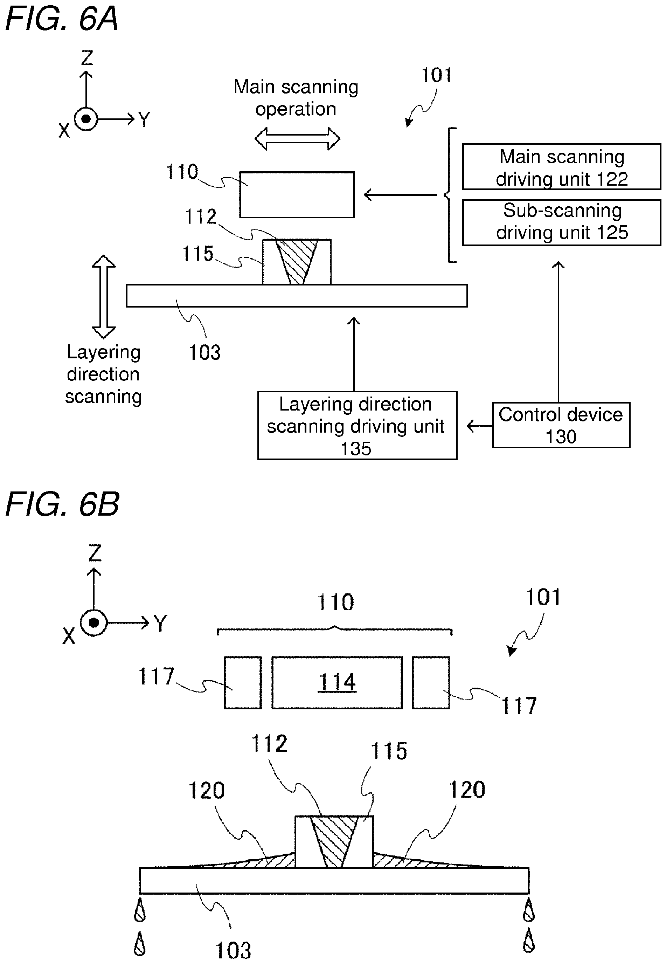

FIG. 6A shows a configuration view describing a configuration of a conventional three-dimensional shaping device 101. The three-dimensional shaping device 101 includes a control device 130 that controls the entire shaping process, a supplying unit (head unit) 110 with an ejection unit for ejecting droplets to become a material of a three-dimensional shaped object 112 and the like, and a shaping table 103 on which the three-dimensional shaped object 112 is layered and shaped. More specifically, the shaping table 103 is a table-shaped member that supports the three-dimensional shaped object 112 being shaped, and is disposed at a position facing the supplying unit 110, and has the three-dimensional shaped object 112 being shaped placed on the upper surface. The shaping table 103 is scanned in the layering direction, specifically in the Z direction in the figure by a layering direction scanning driving unit 135, and the relative positional relationship between the shaping table 103 and the supplying unit 110 in the Z direction in the figure is changed.

Furthermore, the supplying unit 110 is two-dimensionally scanned in an XY plane in the figure. Specifically, the supplying unit 110 is driven by a main scanning driving unit 122 in a Y direction in the figure, which is a predetermined main scanning direction, and the main scanning operation is performed. The main scanning operation is, for example, an operation of ejecting droplets of ink or the like for shaping while moving in the main scanning direction relatively to the three-dimensional shaped object 112 being shaped. Furthermore, in an X direction in the figure which is a sub-scanning direction, the supplying unit 110 is driven and scanned by a sub-scanning driving unit 125. A driving unit that moves the supplying unit 110, specifically, the main scanning driving unit 122, the sub-scanning driving unit 125, and the layering direction scanning driving unit 135 are respectively controlled by the control device 130.

As described above, the three-dimensional shaping device includes the shaping table 103 on which droplets of ink or the like ejected from the ejection unit of the supplying unit 110 are layered. The shaping table 103 is, for example, an aluminum flat plate whose surface is subjected to alumite-treatment, and the surface on a side where the ink is layered is desirably substantially flat so that the ink is flatly layered.

### SUMMARY

FIG. 6B shows details of the supplying unit 110 of the three-dimensional shaping device 101 and the layering mode of the three-dimensional shaped object 112. The supplying unit 110 includes an ejection unit (head) 114 that ejects ink to be layered and an ultraviolet light source 117 that irradiates ultraviolet light, where the ink is layered on the shaping table 103 to create the three-dimensional shaped object 112. Here, the ink ejected from the ejection unit contains an ultraviolet curable resin as a component, and is cured when irradiated with an ultraviolet light from the ultraviolet light source 117. Color ink such as Y (yellow), M (magenta), C (cyan), K (black), and the like, colorless and transparent clear ink, support material ink for forming a support layer 115, and the like are ejected from the ejection unit 114. The support layer 115 is a layered structure formed under an overhang shaped part at the time of shaping, for example, when shaping the shaped object 112 having an overhang shape. The support layer 115 is formed as necessary at the time of shaping of the three-dimensional shaped object 112 and removed after the completion of the shaping.

FIG. 6B further shows a state in which waste liquid (liquid) 120 that has oozed out from the shaped object by the support material ink absorbing moisture has accumulated on the shaping table 103. When shaping a large three-dimensional shaped object, a long time of several days is required for the shaping. For example, when the support material ink constituting the support layer 115 supporting the three-dimensional shaped object 112 contains polyvinyl alcohol or the like as a component, the component that constitutes the ink may ooze out by absorbing a large amount of moisture in the air thus producing the waste liquid 120. In addition, water may be injected to create a hollow part in the shaped object, and a part of the water may leak out as the waste liquid 120. When such waste liquid 120 is produced, a problem arises that the waste liquid 120 flows out from the shaping table 103 and adversely affects a control device disposed below the shaping table 103, a ball screw constituting the layering direction scanning driving unit, and the like.

The ink ejected from the supplying unit 110 includes, for example, an ultraviolet curable resin as a component, which is cured only after being irradiated with the ultraviolet light from the ultraviolet light source. Therefore, if the ultraviolet light source 117 fails to irradiate ultraviolet light for some reason, the ultraviolet curable resin does not cure and may spread on the shaping table 103 as it is. In this case, the waste liquid 120 includes not only the waste liquid 120 produced from the support material ink but also other color ink which is not cured, and may flow down from the shaping table 103 and adversely affect the three-dimensional shaping device 1.

In view of such circumstances, the present disclosure provides a three-dimensional shaping device having a mechanism for preventing waste liquid (liquid) produced on a shaping table from flowing down from the shaping table.

In the present disclosure, the liquid outflow preventing unit for preventing the outflow of liquid or the like derived from ink is provided on the shaping table itself or in the vicinity of the shaping table to reduce the influence on the three-dimensional shaping device itself.
(1) The present disclosure provides a three-dimensional shaping device including a shaping table for shaping a three-dimensional shaped object, a supplying unit that supplies liquid for shaping the three-dimensional shaped object onto the shaping table, and a liquid outflow preventing unit for preventing the liquid from flowing out from the shaping table, where
   the liquid outflow preventing unit includes a preventing unit that prevents the liquid from the shaping table from flowing down or a receiving unit that receives the liquid that has flowed down from the shaping table.

According to the disclosure described in the above (1), even if the liquid for shaping the three-dimensional shaped object has flowed out from the shaping table unexpectedly and has flowed down from the shaping table, an excellent effect that the three-dimensional shaping device is less likely to be adversely affected by such liquid is obtained.

(2) The present disclosure provides the three-dimensional shaping device according to above (1), where when a surface of the shaping table facing the supplying unit is defined as a surface of the shaping table, the preventing unit is a groove-shaped recess formed on the surface of the shaping table or a wall-shaped projection formed on the surface of the shaping table.

According to the disclosure described in the above (2), since the groove-shaped recess or the wall-shaped projection is formed on the surface of the shaping table as the liquid outflow preventing unit, the liquid for shaping the three-dimensional shaped object, for example, the liquid including ink and component constituting the ink, and the like can be prevented from flowing down from the shaping table, and an excellent effect that the control device, the driving unit, and the like disposed below the shaping table are less likely to be adversely affected is obtained.

(3) The present disclosure provides the three-dimensional shaping device according to above (1), where the receiving unit is disposed beside or below the shaping table, and is a gutter-shaped recess for receiving the liquid that has flowed down from the shaping table.

According to the disclosure described in the above (3), since as the liquid outflow preventing unit, the gutter-shaped recess for receiving the liquid is arranged beside or below the shaping table, the gutter-shaped recess can receive the liquid that has flowed down from the shaping table, and an excellent effect that the control device, the driving unit, and the like disposed below the shaping table are less likely to be adversely affected is obtained.

(4) The present disclosure provides the three-dimensional shaping device according to above (2), in which on a bottom surface of the groove-shaped recess, a through hole portion which is a pass-through hole formed to pass through to a back surface side, which is a back side of the surface of the shaping table, and a storing portion for storing the liquid that has flowed down toward the back surface side through the through hole portion are provided.

According to the disclosure described in the above (4), since the groove-shaped recess includes the through hole portion, which is a pass-through hole, and the storing portion for accumulating the liquid that has flowed down through the through hole portion is further provided, the liquid for shaping the three-dimensional shaped object, for example, liquid containing ink and a component constituting the ink, and the like can be discharged and stored, and an excellent effect that such liquid is less likely to flow down from the shaping table and adversely affect the three-dimensional shaping device is obtained.

(5) The present disclosure provides the three-dimensional shaping device according to above (3), in which on a bottom surface of the gutter-shaped recess, a through hole portion which is a pass-through hole formed to pass through to a back surface side, which is a back side of the surface of the shaping table, and a storing portion for storing the liquid that has flowed down toward the back surface side through the through hole portion are provided.

According to the disclosure described in the above (5), since the gutter-shaped recess includes the through hole portion, which is a pass-through hole, and the storing portion for accumulating the liquid that has flowed down through the through hole portion is further provided, the liquid for shaping the three-dimensional shaped object, for example, liquid containing ink and a component constituting the ink, and the like can be discharged and stored, and an excellent effect that such liquid is less likely to flow down from the shaping table and adversely affect the three-dimensional shaping device is obtained.

(6) The present disclosure provides the three-dimensional shaping device according to above (1), in which the liquid outflow preventing unit is formed continuously over the entire periphery so as to surround a shaping region provided on the surface of the shaping table in which the three-dimensional shaped object is shaped.

According to the disclosure described in the above (6), since the liquid outflow preventing unit capable of preventing the outflow of the liquid is provided so as to surround the shaping region where the three-dimensional shaped object is shaped, the liquid generated in the shaping region can be received without leaking, and an excellent effect that the control device, the driving unit, and the like disposed below the shaping table are less likely to be adversely affected by the liquid is obtained.

(7) The present disclosure provides the three-dimensional shaping device according to above (1), in which the liquid outflow preventing unit includes a receiving surface for receiving the liquid, and a holding wall standing continuously upward from the receiving surface to hold the liquid together with the receiving surface, and the liquid outflow preventing unit is disposed between the shaping table and the floor to receive the liquid from the shaping table.

According to the disclosure described in the above (7), the liquid outflow preventing unit includes the receiving surface for receiving the liquid and the holding wall standing continuously upward from the receiving surface to hold the liquid together with the receiving surface, and the liquid outflow preventing unit can prevent the liquid from the shaping table from flowing down by being arranged between the shaping table and the floor. Therefore, for example, the liquid containing ink or components constituting the ink or the like can be received, and when the waste liquid is generated without curing the ink that is to constitute the three-dimensional shaped object, or oozes out from the support material ink, which is the material of the support layer, thus generating the waste liquid, even if the liquid flows down from the shaping table, the liquid is received, and an excellent effect that the control device, the driving unit, and the like disposed below the shaping table are less likely to be adversely affected by the waste liquid is obtained.

(8) The present disclosure provides the three-dimensional shaping device according to any one of above (1) to (7), further including an ultraviolet light source that cures ultraviolet curable ink serving as the liquid, in which at least a part of the liquid is uncured ultraviolet curable ink.

When the ink ejected from the ejection unit is an ultraviolet curable ink that contains an ultraviolet curable resin and is cured by irradiation of ultraviolet light, the ink to constitute the three-dimensional shaped object and the support material ink are not cured, and the waste liquid is generated, if the ultraviolet light is not irradiated, for example, due to failure of the ultraviolet light source, and the like. According to the disclosure described in the above (8), the waste liquid generated without curing the ink can be prevented from flowing down from the shaping table, or even if the waste liquid has flowed down from the shaping table, the waste liquid can be received, and thus an excellent effect that the three-dimensional shaping device itself is less likely to be adversely affected is obtained.

(9) The present disclosure provides the three-dimensional shaping device according to above (8), further including an ultraviolet light source that cures a support material ink, which is ultraviolet curable ink serving as a support material, in which at least a part of the liquid is liquid that oozes out from the support material ink cured by the ultraviolet light source after the shaping of the three-dimensional shaped object.

According to the disclosure described in the above (9), even when the support material ink, which is the material of the support layer, absorbs moisture in the air and, for example, a component of the ink oozes out, thus producing the waste liquid, the waste liquid can be prevented from flowing down from the shaping device or even if the waste liquid has flowed down from the shaping table, the waste liquid can be received, and thus an excellent effect that the three-dimensional shaping device is less likely to be adversely affected is obtained.

(10) The present disclosure provides the three-dimensional shaping device according to above (8), further including a flattening roller for layering and shaping a plurality of layers made of a shaping material constituting the three-dimensional shaped object as the liquid, in which at least a part of the liquid is water that is arranged inside when forming the layer, and that overflows from the inside accompanying the flattening by the flattening roller of the layer.

When shaping a three-dimensional shaped object, water may be injected into the inside of the shaped object. According to the disclosure described in the above (10), when flattening one part of the ink with the flattening roller, the water that unexpectedly leaks out from the shaping table can be prevented from flowing down from the shaping table or even if the water has flowed down from the shaping table, the water can be received, and thus an excellent effect that the control device and the like of the three-dimensional shaping device are less likely to be adversely affected is obtained.

According to the three-dimensional shaping device described in Claims 1 to 10 of the present disclosure, for example, even when the waste liquid is generated without the ink constituting the three-dimensional shaped object and the support material ink curing, or even when the waste liquid is generated by oozing out from the support material ink, the waste liquid is prevented from flowing down from the shaping table or even if the waste liquid has flowed down from the shaping table, the waste liquid can be received, and thus the three-dimensional shaping device is less likely to be adversely affected.

### BRIEF DESCRIPTION OF DRAWINGS

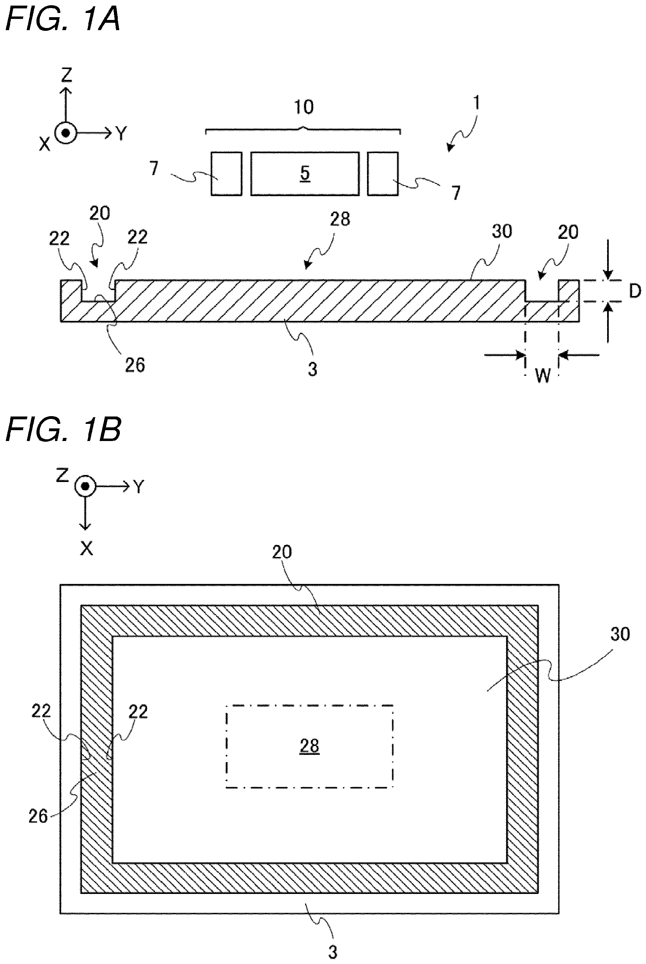

FIG. 1A is a cross-sectional view of a three-dimensional shaping device according to a first embodiment of the present disclosure, in which a groove-shaped liquid outflow preventing unit, which is a recess, is provided at a periphery of a shaping region of a shaping table. FIG. 1B is a top view of a shaping table provided with the groove-shaped liquid outflow preventing unit.

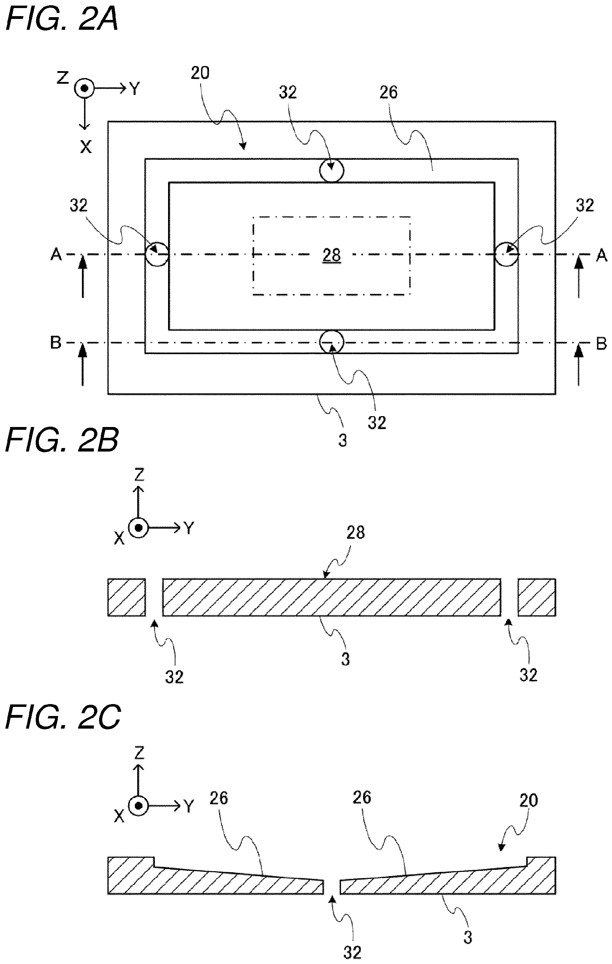

FIG. 2A is a top view of a three-dimensional shaping device according to a second embodiment of the present disclosure, in which a liquid outflow preventing unit provided in a shaping table includes a through hole portion, which is a pass-through hole. FIG. 2B is a cross-sectional view taken along the arrow AA of the shaping table. FIG. 2C is a cross-sectional view taken along the arrow BB of the shaping table.

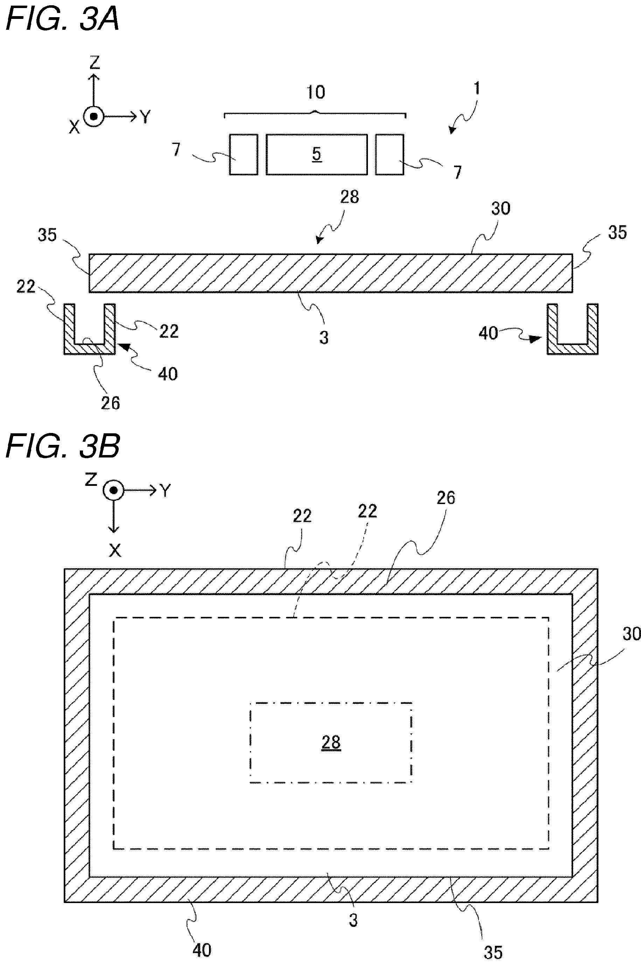

FIG. 3A is a cross-sectional view of a three-dimensional shaping device according to a third embodiment of the present disclosure, in which a gutter-like liquid outflow preventing unit for receiving liquid is provided below the outer edge of the shaping table. FIG. 3B is a top view of a shaping table provided with the gutter-like liquid outflow preventing unit.

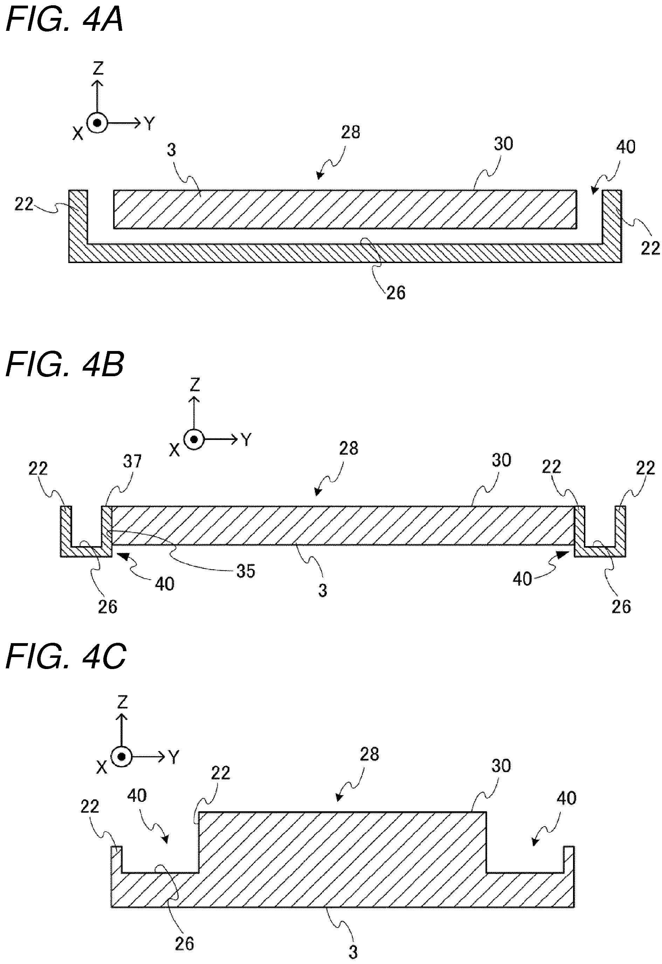

FIG. 4A is a cross-sectional view of a shaping table of a three-dimensional shaping device according to a fourth embodiment of the present disclosure, in which a dish-shaped liquid outflow preventing unit is provided under the shaping table. FIG. 4B is a cross-sectional view of a shaping table provided in a three-dimensional shaping device according to a fifth embodiment of the present disclosure, in which a liquid outflow preventing unit for receiving liquid is provided along the outer edge of the shaping table. FIG. 4C is a cross-sectional view showing a shaping table provided in a three-dimensional shaping device according to a sixth embodiment of the present disclosure in which a recessed receiving surface is provided along the outer periphery of the shaping table.

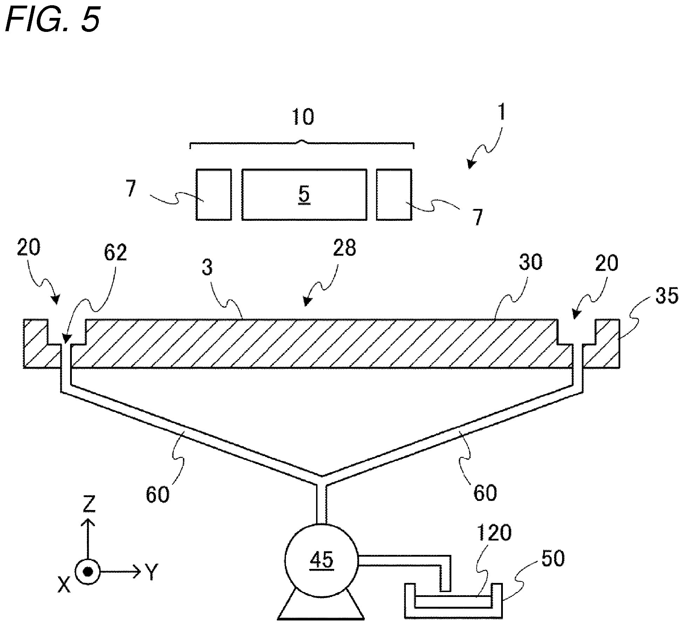

FIG. 5 is an explanatory view describing a three-dimensional shaping device according to a seventh embodiment of the present disclosure, in which a flow path for guiding the waste liquid generated on the shaping table and a suction device connected to the flow path to suction the waste liquid are provided.
FIG. 6A is an explanatory view describing a configuration of a three-dimensional shaping device for shaping a three-dimensional shaped object. FIG. 6B is an explanatory view showing a state in which the waste liquid derived from ink ejected on a shaping table on which a three-dimensional shaped object is shaped has accumulated.

### DESCRIPTION OF EMBODIMENTS

Hereinafter, embodiments of the present disclosure will be described with reference to the accompanying drawings.

FIGs. 1 to 5 show one example of the embodiments of the disclosure, and portions denoted with the same reference numerals in the figure indicate the same parts. In each figure, configuration of one part is appropriately omitted to simplify the figure. The size, shape, thickness, and the like of the members are represented in an appropriately exaggerated manner.

The three-dimensional shaping devices 1 according to the embodiments of the present disclosure have the same or similar configuration and feature as those of the known three-dimensional shaping device described in FIGs. 6A and 6B other than the points particularly described. Specifically, a three-dimensional shaping device 1 has the same or similar features as those of a known shaping device that performs three-dimensional shaping by ejecting droplets of ink or the like that is to become a material of a shaped object using an inkjet head. Furthermore, other than the illustrated configuration, the three-dimensional shaping device 1 may also include, for example, various types of configurations necessary for shaping and the like of the shaped object. In the present specification, the term "liquid" or "waste liquid" refers to, for example, liquid that has flowed out without curing of the ink supplied from the supplying unit (head unit) 10, liquid such as water injected into the shaped object during shaping, liquid or the like that has oozed out from the shaped object or a support layer.

FIG. 1A is a cross-sectional view of a three-dimensional shaping device 1 according to a first embodiment of the present disclosure in which a grooved shaped liquid outflow preventing unit 20, which is a recess, is provided at a periphery of a shaping region 28 where a three-dimensional shaped object is shaped on a shaping table 3.

Specifically, the three-dimensional shaping device 1 includes the shaping table 3 for shaping a three-dimensional shaped object, a supplying unit 10 for supplying liquid for shaping the three-dimensional shaped object onto the shaping table 3, and a liquid outflow prevention unit 20 for preventing the liquid from flowing out from the shaping table 3.

The three-dimensional shaping device 1 includes an ejection unit 5 that ejects ink for three-dimensional shaping provided in the supplying unit 10, and the shaping table 3 disposed facing a planar portion in a Z direction in the figure with respect to the ejection unit 5. The shaping table 3 has a substantially flat upper surface (surface) 30 on which the three-dimensional shaped object is shaped. The three-dimensional shaping device 1 further includes a main scanning driving unit 122 (see FIG. 6A) that causes the ejection unit to perform the main scanning operation of ejecting ink while relatively moving with respect to the three-dimensional shaped object 112 (see FIG. 6A) being shaped in the main scanning direction (Y direction in the figure) set in advance, a sub-scanning driving unit 125 (see FIG. 6A) that relatively moves the ejection unit 5 with respect to the three-dimensional shaped object 112 in the sub-scanning direction (X direction in the figure), a layering direction driving unit 135 (see FIG. 6A) that causes the layering direction scanning of moving the shaping table 3 relative to the ejection unit 5 to be performed in the layering direction (Z direction in the figure), which is a direction in which ink is layered, and a control device 130 (see FIG. 6A) of controlling the entire shaping process of the three-dimensional shaped object 112.

The control device 130 (see FIG. 6A) is configured by a CPU, a RAM, a ROM, and the like, and executes various controls. The CPU is a so-called central processing unit, and various programs are executed to realize various functions. The RAM is used as a work area and a storage area of the CPU, and the ROM stores an operating system and programs executed by the CPU.

The ejection unit 5 includes a support material head that is an ejection head that ejects support material ink, which is a material of the support layer 115 (see FIG. 6A) that supports the three-dimensional shaped object 112 being shaped, and a shaped object head that is an ejection head that ejects shaped object ink constituting the three-dimensional shaped object 112, the shaped object ink being an ultraviolet curable ink.

Note that here, the shaped object ink means, for example, color ink, shaping material ink, white ink, and clear ink.

Specifically, the ejection unit 5 includes a support material head (head is not shown in the figure), a plurality of color ink heads, a shaping material head, a white ink head, a clear ink head, a plurality of ultraviolet light sources 7, and a flattening roller (not shown).

The color ink head, the shaping material head, the white ink head, the clear ink head, and the support material head are inkjet heads that eject droplets through an inkjet scheme. Furthermore, in the present embodiment, the color ink head, the shaping material head, the white ink head, the clear ink head, and the support material head are inkjet heads that eject droplets of ultraviolet curable ink, and are arranged side by side in the main scanning direction (Y direction) with their positions in the sub-scanning direction (X direction) aligned.

For example, a well-known inkjet head can be suitably used as the color ink head, the shaping material head, the white ink head, the clear ink head, and the support material head. Furthermore, such inkjet heads each include a nozzle row, in which a plurality of nozzles are arranged in a sub-scanning direction, on a surface facing the shaping table 3. In this case, the nozzles of each inkjet head eject droplets in the direction toward the shaping table 3 (downward in the Z direction in the figure).

The shaping material ink for forming the shaping material does not need to be used.

The support material head is an inkjet head that ejects droplets containing the material of the support layer 115 (see FIG. 6A). As the material of the support layer 115, for example, a water-soluble material that can be dissolved in water after the shaping of the three-dimensional shaped object 112 can be suitably used. In this case, a material whose curing degree by the ultraviolet light is weaker and which can be easily decomposed than the material constituting the three-dimensional shaped object 112 (see FIG. 6A) is preferably used. More specifically, for example, a known material for the support layer can be suitably used for the material of the support layer 115.

The support layer 115 is a layered structural object formed under the overhang shaped part at the time of shaping, for example, when shaping the three-dimensional shaped object 112 having the overhang shape. The support layer 115 is formed as necessary at the time of shaping of the three-dimensional shaped object 112 and removed after the completion of the shaping.

The shaping table 3 is a table-shaped member that supports the three-dimensional shaped object 112 being shaped, and is disposed at a position facing the inkjet head in the supplying unit 10, and has the three-dimensional shaped object 112 being shaped placed on the upper surface thereof. Furthermore, in the present embodiment, the shaping table 3 has a configuration in which at least the upper surface is movable in the layering direction, and at least the upper surface moves according to the progress of shaping of the three-dimensional shaped object 112 by being driven by the layering direction driving unit 135 (see FIG. 6A). In this case, the layering direction is, for example, a direction in which the material of shaping is layered in the layering shaping method. More specifically, in the present embodiment, the layering direction is a direction (Z direction in the figure) orthogonal to the main scanning direction (Y direction in the drawing) and the sub-scanning direction (X direction in the drawing) set in advance in the three-dimensional shaping device 1.

The shaping table 3 is an aluminum flat plate having a substantially flat upper surface 30 and in which the upper surface 30 is alumite-processed. The surface roughness of the upper surface 30 is, for example, 200 microns in arithmetic average roughness.

A shaping region 28 where the three-dimensional shaped object 112 is shaped is provided on the upper surface 30 of the shaping table 3. The shaping region 28 is desirably provided near the center of the shaping table 3.

The shaping table 3 includes a groove-shaped liquid outflow preventing unit 20 at the periphery of the shaping region 28 on the upper surface 30. The groove-shaped liquid outflow preventing unit 20 is formed in the shaping table 3, and is, for example, an annular recess configured by a holding wall 22 and a receiving surface 26.

Specifically, the liquid outflow preventing unit 20 includes the receiving surface 26 for receiving the waste liquid 120 containing, for example, ink or a component constituting the ink, and the holding wall 22 standing continuously upward from the receiving surface 26 to hold the liquid with the receiving surface 26. The groove-shaped liquid outflow preventing unit 20 is a recess formed in the upper surface 30 of the shaping table 3, and has a width W of, for example, 5 mm to 1 cm, and has a depth D of, for example, 5 mm to 1 cm downward in the Z direction.

The holding wall 22 naturally includes a case where the angle formed by surface configured by the inner wall of the holding wall 22 and the upper surface 30 is not vertically downward. Specifically, cases where the holding wall 22 has an inclined surface in which the angle formed by the inner wall surface configured by the holding wall 22 and the upper surface 30 is less than 90° or larger than 90° are also included.

Furthermore, the groove-shaped liquid outflow preventing unit 20 includes a case where the area of the receiving surface 26 is small. Specifically, the V-shaped groove in which the cross section of the groove-shaped liquid outflow preventing unit 20 is a substantially V-shape or the U-shaped groove in which the cross section of the groove-shaped liquid outflow preventing unit 20 is a substantially U-shape may be adopted.

FIG. 1B is a top view of the shaping table 3 including the groove-shaped liquid outflow preventing unit 20. The groove-shaped liquid outflow preventing unit 20 is formed, for example, in an annular shape on the upper surface 30 so as to surround the shaping region 28. Specifically, the receiving surface 26 and the holding wall 22 are continuously formed, and constitute a groove-shaped liquid outflow preventing unit 20 provided around the shaping region 28.

Next, the operation of the three-dimensional shaping device 1 according to the above-described first embodiment will be described.

The groove-shaped liquid outflow preventing unit 20 receives the waste liquid 120 (see FIG. 6B) generated in the shaping region 28. The waste liquid 120 generated in the shaping region 28 contains ink ejected by the ejection unit 5 or a component constituting the ink. Specifically, at least a part of the waste liquid 120 is a liquid that has oozed out from the support material ink or the like after the shaping of the three-dimensional shaped object 112. Furthermore, at least a part of the waste liquid 120 is a shaped object ink that has not been cured, specifically, an ultraviolet curable ink.

According to the three-dimensional shaping device 1 of the first embodiment of the present disclosure, even if the liquid 120 for shaping a three-dimensional shaped object flows out from the shaping table 3 unexpectedly and falls down from the shaping table 3, this can be prevented, and hence an excellent effect that the three-dimensional shaping device 1 is less likely to be adversely affected by such liquid 120 is obtained.

According to the three-dimensional shaping device 1 of the first embodiment of the present disclosure, since the recess is formed as the liquid outflow preventing unit 20 on the upper surface (surface) 30 of the shaping table 3, the liquid for shaping a three-dimensional shaped object, for example, the liquid 120 containing ink and component constituting the ink and the like can be received, whereby the liquid 120 can be prevented from flowing down from the shaping table 3, and an excellent effect that the control device, the driving unit, and the like disposed below the shaping table 3 are less likely to be adversely affected can be obtained.

According to the three-dimensional shaping device 1 of the first embodiment of the present disclosure, since the liquid outflow preventing unit 20 capable of preventing the outflow of the liquid 120 is provided so as to surround the shaping region 28 where the three-dimensional shaped object is shaped, the liquid 120 generated in the shaping region 28 can be received without leaking, and the liquid can be prevented from flowing down from the shaping table, and an excellent effect that the control device, the driving unit, and the like disposed below the shaping table 3 are less likely to be adversely affected by the liquid 120 is obtained.

When the ink ejected from the ejection unit 5 is an ultraviolet curable ink that contains an ultraviolet curable resin and is cured by irradiation of ultraviolet light, the ink constituting the three-dimensional shaped object and the support material ink are not cured, and the waste liquid is generated, for example, if the ultraviolet light is not irradiated due to failure of the ultraviolet light source 7, and the like. According to the three-dimensional shaping device 1 of the first embodiment of the present disclosure, the waste liquid 120 generated without curing the ink can be prevented from flowing down from the shaping table, or even if the waste liquid has flowed down from the shaping table, the waste liquid 120 can be received, and thus an excellent effect that the three-dimensional shaping device itself is less likely to be adversely affected is obtained.

According to the three-dimensional shaping device 1 of the first embodiment of the present disclosure, even when the support material ink, which is the material of the support layer, absorbs moisture in the air and, for example, a component of the ink oozes out thus producing the waste liquid 120, the waste liquid 120 can be prevented from flowing down from the shaping device 3 or even if the waste liquid has flowed down from the shaping table 3 the waste liquid 120 can be received, and thus an excellent effect that the three-dimensional shaping device 1 is less likely to be adversely affected is obtained.

When shaping a three-dimensional shaped object, water may be injected into the inside of the shaped object. According to the three-dimensional shaping device 1 of the first embodiment of the present disclosure, when flattening one part of the ink with the flattening roller, the water that unexpectedly leaks out can be prevented from flowing down from the shaping table 3 or even if the water has flowed down from the shaping table 3, the water can be received, and thus an excellent effect that the control device and the like of the three-dimensional shaping device 1 are less likely to be adversely affected is obtained.
An excellent effect that the control device and the like of the three-dimensional shaping device 1 is less likely to be adversely affected is obtained.

FIG. 2A is a top view of a three-dimensional shaping device 1 according to a second embodiment of the present disclosure in which the liquid outflow preventing unit 20 provided in the shaping table 3 includes a through hole portion 32 which is a pass-through hole. Specifically, the liquid outflow preventing unit 20 is a groove-shaped recess formed in the shaping table 3 similar to the first embodiment of the present disclosure, and in the second embodiment, the liquid outflow preventing unit 20 includes at least one through hole portion 32 which is a pass-through hole formed in the shaping table 3.

FIG. 2B is a cross-sectional view taken along the arrow AA in FIG. 2A of the shaping table 3. The shaping table 3 includes the through hole portion 32, which is a pass-through hole.

FIG. 2C is a cross-sectional view taken along the arrow BB in FIG. 2A of the shaping table 3. The receiving surface 26 has a downward inclination toward the through hole portion 32. The waste liquid 120 is easily guided to the through hole portion 32 by providing such inclination. A storing portion (not shown) for storing the waste liquid 120 is desirably provided at the lower part of the through hole portion 32.

According to the three-dimensional shaping device 1 of the second embodiment of the present disclosure, the groove-shaped recess includes the through hole portion 32, which is a pass-through hole, and the storing portion for accumulating the liquid 120 that has flowed down through the through hole portion 32 is further provided, so that the liquid 120 for shaping the three-dimensional shaped object, for example, liquid containing ink and a component constituting the ink, and the like can be discharged and stored, and an excellent effect that such liquid is less likely to flow down from the shaping table 3 and adversely affect the three-dimensional shaping device 1 is obtained.

FIG. 3A shows a cross-sectional view of a three-dimensional shaping device 1 according to a third embodiment of the present disclosure, in which a liquid outflow preventing unit 40 for receiving liquid is provided below an outer edge 35 of the shaping table 3.

The supplying unit 10 has the configuration similar to the first embodiment of the present disclosure described above, and thus its description will be omitted. In the present embodiment, the shaping table 3 and the liquid outflow preventing unit 40 may be separate bodies.

Specifically, the liquid outflow preventing unit 40 includes the receiving surface 26 for receiving the waste liquid 120 and the holding wall 22 standing continuously upward from the receiving surface 26 to hold the waste liquid 120 together with the receiving surface 26, and the liquid outflow preventing unit 40 prevents the waste liquid 120 from the shaping table 3 from flowing down by being arranged between the shaping table 3 and the floor.

The liquid outflow preventing unit 40 desirably has a flow path structure in which an upper part is released like a gutter.

FIG. 3B is a top view of the shaping table 3 provided with the liquid outflow preventing unit 40. The liquid outflow preventing unit 40 is provided facing downward in the Z axis direction of the outer edge 35 of the shaping table 3 in the figure. Therefore, the waste liquid 120 generated in the shaping region 28 flows downward in the Z axis direction in the figure from the outer edge 35 of the shaping table, and is received by the liquid outflow preventing unit 40.

According to the three-dimensional shaping device 1 of the third embodiment of the present disclosure, the liquid outflow preventing unit 40 includes the receiving surface for receiving the liquid and the holding wall standing continuously upward from the receiving surface to hold the liquid together with the receiving surface, and the liquid outflow preventing unit 40 can prevent the liquid 120 from the shaping table 3 from flowing down by being arranged between the shaping table 3 and the floor. Therefore, for example, the liquid 120 containing ink or components constituting the ink or the like can be received, and when the waste liquid is generated without curing the ink that constitutes the three-dimensional shaped object, or when oozing out from the support material ink, which is the material of the support layer, thus generating the waste liquid 120, even if the waste liquid 120 flows down from the shaping table 3, the waste liquid 120 is received, and an excellent effect that the control device, the driving unit and the like disposed below the shaping table 3 are less likely to be adversely affected by the waste liquid 120 is obtained.

FIG. 4A is a cross-sectional view of the shaping table 3 provided in a three-dimensional shaping device 1 according to a fourth embodiment of the present disclosure, in which a dish-shaped liquid outflow preventing unit 40 is provided under the shaping table 3. Specifically, the liquid outflow preventing unit 40 includes the receiving surface 26, and the holding wall 22 standing continuously upward from the receiving surface 26 to hold the waste liquid 120 together with the receiving surface 26.

The dish-shaped liquid outflow preventing unit 40 can prevent the waste liquid 120 from the shaping table 3 from flowing down by being arranged between the shaping table 3 and the floor. Therefore, for example, the liquid containing ink or components constituting the ink or the like can be received, and when the waste liquid is generated without curing the ink that constitutes the three-dimensional shaped object, or when oozing out from the support material ink thus generating the waste liquid 120, the waste liquid 120 is received by the liquid outflow preventing unit 40, and an excellent effect that the control device, the driving unit and the like disposed below the shaping table 3 are less likely to be adversely affected by the waste liquid 120 is obtained.

FIG. 4B is a cross-sectional view of a shaping table 3 of a three-dimensional shaping device 1 according to a fifth embodiment of the present disclosure, in which a liquid outflow preventing unit 40 for receiving the waste liquid 120 is provided along the outer edge 35 of the shaping table 3. In the present embodiment, the three-dimensional shaping device 1 naturally includes the supplying unit 10 (see FIG. 1A), etc., but has the configuration similar to the above-described first embodiment, and thus its description will be omitted.

The liquid outflow preventing unit 40 is provided on the outer edge 35 of the shaping table of the shaping table 3. Specifically, the liquid outflow preventing unit 40 is configured by the receiving surface 26 disposed below the holding wall 22, and the holding wall 22 standing continuously upward from the receiving surface 26 to hold the waste liquid 120 together with the receiving surface 26, and is provided annularly along the outer periphery of the shaping table 3. The waste liquid 120 generated in the shaping region 28 falls downward in the Z direction in the figure from the holding wall 22, is received by the receiving surface 26 and held by the receiving surface 26 and the holding wall 22. The liquid outflow preventing unit 40 may be a separate body from the shaping table 3. Furthermore, the upper part 37 of the liquid outflow preventing unit is desirably on the same plane as the shaping region 28 or on the lower side in the Z direction in the figure. This is to avoid the waste liquid 120 from accumulating on the upper surface 30. Moreover, it is desirable that there is no gap between the liquid outflow preventing unit 40 and the outer edge 35 of the shaping table.

FIG. 4C is a cross-sectional view showing a shaping table 3 of a three-dimensional shaping device 1 according to a sixth embodiment of the present disclosure, in which a recessed receiving surface 26 and a holding wall 22 integral with the shaping table 3 are formed on the outer edge of the shaping table 3. In the sixth embodiment, the three-dimensional shaping device 1 naturally includes the supplying unit 10 (see FIG. 1A) and the like, but has the configuration similar to the above-described first embodiment, and thus its description will be omitted. In the present embodiment, the receiving surface 26 is provided annularly along the outer periphery of the shaping table 3. Even if the waste liquid 120 generated in the shaping region 28 flows down from the upper surface 30, the waste liquid is received by the receiving surface 26 and held by the receiving surface 26 and the holding wall 22.

FIG. 5 is an explanatory view describing a three-dimensional shaping device 1 according to a seventh embodiment of the present disclosure, in which a flow path 60 for guiding the waste liquid 120 generated on the shaping table 3 and a suction device 45 connected to the flow path 60 to suction the waste liquid 120 are provided.

Specifically, the three-dimensional shaping device 1 includes the flow path 60 capable of collecting the waste liquid 120 from the liquid outflow preventing unit 20 to a predetermined place. Furthermore, the three-dimensional shaping device 1 further includes the suction device 45 connected to the flow path 60 to suction the waste liquid 120.

The supplying unit 10 has the configuration similar to the first embodiment of the present disclosure described above, and thus its description will be omitted.

The groove-shaped liquid outflow preventing unit 20 is provided annularly at the periphery of the shaping region 28 along the outer periphery of the shaping table 3, and the groove-shaped liquid outflow preventing unit 20 includes at least one waste liquid hole 62 for flowing out the waste liquid 120 to the flow path 60. The waste liquid 120 generated in the shaping region 28 flows on the upper surface 30 and flows into the groove-shaped liquid outflow preventing unit 20, and is guided from the waste liquid hole 62 to the flow path 60. The waste liquid 120 is suctioned from the flow path 60 by the suction device 45, and stored in the waste liquid storing portion 50.

According to the three-dimensional shaping device 1 of the seventh embodiment of the present disclosure, since the flow path 60 for guiding the waste liquid 120 generated on the shaping table 3 from the liquid outflow prevention unit 20 is provided, an unexpected accident can be prevented by collecting the waste liquid 120 generated on the shaping table 3 to a predetermined place.

According to the three-dimensional shaping device 1 of the seventh embodiment of the present disclosure, the flow path 60 for guiding the waste fluid 120 and the suction device 45 connected to the flow path 60 to suction the waste fluid 120 are further provided, so that the shaping table 3 can be constantly kept in a state where the liquid is scarce by suctioning the waste liquid 120 generated on the shaping table 3, whereby the waste liquid 120 is prevented from flowing down from the shaping table 3, and the waste liquid 120 is less likely to adversely affect the control device, the driving unit, and the like disposed below the shaping table 3.

The three-dimensional shaping device and the three-dimensional shaping method of the present disclosure are not limited to the above-described embodiments, and various modifications may, of course, be made within a scope not deviating from the gist of the present disclosure.

For example, the three-dimensional shaping device may include a wall portion vertically standing upward along the outer periphery of, for example, the shaping table as a liquid outflow preventing unit to prevent the waste liquid from flowing down from the shaping table.

It is also conceivable to incline the receiving surface of the liquid outflow preventing unit in each embodiment so that the waste liquid easily flows in a specific direction.

It is also conceivable to combine the above-described embodiments. For example, the three-dimensional shaping device may include a groove-shaped liquid outflow preventing unit formed on the shaping table and a gutter structure provided between the shaping table and the floor in combination. In this case, the waste liquid can be more effectively removed from the shaping table, and the adverse effect on the control device disposed under the shaping table can be prevented.

## Claims

1. A three-dimensional shaping device comprising:
a shaping table for shaping a three-dimensional shaped object;
a supplying unit that supplies liquid for shaping the three-dimensional shaped object onto the shaping table; and
a liquid outflow preventing unit for preventing the liquid from flowing out from the shaping table, wherein
the liquid outflow preventing unit includes a preventing unit that prevents the liquid from the shaping table from flowing down or a receiving unit that receives the liquid that has flowed down from the shaping table.

2. The three-dimensional shaping device according to claim 1, wherein when a surface of the shaping table facing the supplying unit is defined as a surface of the shaping table,
the preventing unit is a groove-shaped recess formed on the surface of the shaping table or a wall-shaped projection formed on the surface of the shaping table.

3. The three-dimensional shaping device according to claim 1, wherein the receiving unit is disposed beside or below the shaping table, and is a gutter-shaped recess for receiving the liquid that has flowed down from the shaping table.

4. The three-dimensional shaping device according to claim 2, wherein on a bottom surface of the groove-shaped recess, a through hole portion which is a pass-through hole formed to pass through to a back surface side, which is a back side of the surface of the shaping table, and
a storing portion for storing the liquid that has flowed down toward the back surface side through the through hole portion are provided.

5. The three-dimensional shaping device according to claim 3, wherein on a bottom surface of the gutter-shaped recess, a through hole portion which is a pass-through hole formed to pass through to a back surface side, which is a back side of the surface of the shaping table, and
a storing portion for storing the liquid that has flowed down toward the back surface side through the through hole portion are provided.

6. The three-dimensional shaping device according to claim 1, wherein the liquid outflow preventing unit is formed continuously over the entire periphery so as to surround a shaping region provided on the surface of the shaping table and in which the three-dimensional shaped object is shaped.

7. The three-dimensional shaping device according to claim 1, wherein the liquid outflow preventing unit includes
a receiving surface for receiving the liquid, and
a holding wall standing continuously upward from the receiving surface to hold the liquid together with the receiving surface and
the liquid outflow preventing unit is disposed between the shaping table and the floor to receive the liquid from the shaping table.

8. The three-dimensional shaping device according to any one of claims 1 to 7, further comprising an ultraviolet light source that cures ultraviolet curable ink serving as the liquid, wherein
at least a part of the liquid is uncured ultraviolet curable ink.

9. The three-dimensional shaping device according to claim 8, further comprising an ultraviolet light source that cures a support material ink, which is ultraviolet curable ink serving as a support material, wherein
at least a part of the liquid is liquid that oozes out from the support material ink cured by the ultraviolet light source after the shaping of the three-dimensional shaped object.

10. The three-dimensional shaping device according to claim 8, further comprising a flattening roller for layering and shaping a plurality of layers made of a shaping material constituting the three-dimensional shaped object as the liquid, wherein at least a part of the liquid is water that is arranged inside when forming the layer, and that overflows from the inside accompanying the flattening by the flattening roller of the layer.
